# EUROPEAN PATENT SPECIFICATION

(11) **EP 3 553 489 B1**
(45) Date of publication and mention of the grant of the patent: **22.02.2023**
(21) Application number: 18400009.9
(22) Date of filing: 10.04.2018
(51) Int. Cl.: G01M 11/02, G01N 21/88, G01N 21/958, B23K 26/70, G01N 21/95

(54) **AN OPTICAL ELEMENT WITH A DEFECT DETECTING APPARATUS**
OPTISCHES ELEMENT MIT EINER FEHLERERKENNUNGSVORRICHTUNG
ÉLÉMENT OPTIQUE COMPORTANT UN APPAREIL DE DÉTECTION DE DÉFAUT

(43) Date of publication of application: 16.10.2019
(73) Proprietor: AIRBUS HELICOPTERS DEUTSCHLAND GmbH, 86609 Donauwörth (DE)
(72) Inventor: Desmet, Lieven, 86153 Augsburg (DE)
(74) Representative: GPI Brevets

(56) References cited:
- CN-A- 103 576 431
- DE-C1- 19 839 930
- DE-U1- 20 314 918
- US-A1- 2012 154 198
- US-A1- 2014 339 209
- US-A1- 2014 346 330

## Description

The invention is related to a safe-guard apparatus for an optical element, and, more particularly, to an apparatus for detecting defects in an optical element that has an optical beam transforming surface and an optical gate.

Generally, a high-power laser source will in many cases be coupled to an optical element or optical system at the optical exit of the system, to transform the highly collimated laser beam into a light beam that is suitable for the intended end application. Critical optical elements in such an optical system may break under thermal shock vibration, mechanical load, or increased thermal load under contamination of the optical surfaces; with the result that the optical system becomes unsafe outside a predetermined Nominal Ocular Hazard Distance (NOHD).

Document US 2009/0007675 A1 describes a method for detecting a change in the condition of an optical element of a laser arrangement. For this purpose, an ultrasonic signal is coupled into the optical element in such a way that the ultrasonic signal travels along a path within the optical element. A transit time for the ultrasonic signal to travel along the path within the optical element is also detected and compared with a reference value which was previously determined in a reference value measurement. A detected difference between the currently measured transit time and the reference value (e.g., caused by a change in temperature) is indicative of a change in the condition of the optical element.

Document EP 1 354 664 B1 describes a device for monitoring an optical element of a processing head of a machine for thermal processing of a workpiece. The device comprises a separate light source for coupling a light beam in the optical element on the lens surface facing away the workpiece and a detector for acquiring a light beam reflecting in a region of the lens surface facing the workpiece.

Documents US 2009/0007675 A1 and EP 1 354 664 B1 both describe monitoring an optical element for the purpose of maintaining a certain quality of the laser beam in applications such as thermal welding or cutting. In other words, the described apparatuses track whether the operating conditions for an optical element change due to temperature changes or due to deposits or damages to the optic surface to avoid a deterioration of the quality of the laser beam. Thus, these inventions monitor an optical element not for preventing a high-power laser beam from exiting the optical system, but for guaranteeing that the laser beam that exits the optical system is a high-power laser beam suitable for laser cutting or thermal welding applications. Furthermore, document US 2009/0007675 A1 describes using ultrasonic waves for this purpose, while document EP 1 354 664 B1 describes using a reflection in the area of the optical surface of the optical element that faces a workpiece.

The document CN 103576431 B describes a method and a device for protecting human eyes from a high-brightness laser projection machine using a virtual fence. The virtual fence uses sensors for detecting the presence of a living object in front of the laser projection machine. A controller is used for collecting information about the object including the specific position of the object and whether the object is alive. In response to determining that a living object is located within an unsafe distance from the laser projection machine, a command is sent to the laser projection machine. As a result, the light beam output is closed or the brightness of the output is reduced. Thus, instead of trying to safeguard the Nominal Ocular Hazard Distance (NOHD) from an accidental increase, the described solution prevents harming living objects that enter the original NOHD.

The document DE 203 14 918 U1 discloses a system for monitoring a glass for protecting a laser for contamination or breakage in presence of metal spray and vapours during welding or cutting. The system employs a light source and a photodetector positioned at opposite lateral sides of the protective glass.

The document DE 198 39 930 C1 discloses a system for checking the functioning of a transparent protective element for a transparent optical unit of a laser unit.

The document US 2014/339209 A1 discloses a method and a system for monitoring the output of a high power fiber laser system.

The document US 2014/346330 A1 discloses an apparatus for monitoring the process performance of a laser system with a high-power optical fiber cable. The system has sensors arranged for monitoring and controlling a laser application process during action and for the detection of conditions within device.

The document US 2012/154198 A1 discloses a method for operating a jamming laser a DIRCM system in a manner that is safe for eyes.

Based on the limitations and drawbacks of the prior art, an objective is to provide an apparatus for detecting defects in an optical element which receives a high-power optical beam that presents a hazard to any object (e.g., a living being may be injured, a material object may be damaged, a flammable object may be ignited, etc.) and provides a transformed optical beam that no longer presents a hazard.

This objective is solved by an apparatus comprising the features of claim 1.

More specifically, an apparatus for detecting defects in an optical element includes an optical beam transforming surface and an optical gate. The optical beam transforming surface is located on the optical element and transforms a first optical beam to provide a transformed first optical beam. The optical gate comprises an optical detector, an optical source that provides a second optical beam, and an optical waveguide that is coupled to the optical element. The optical waveguide provides an optical beam path for the second optical beam from the optical source to the optical detector when the optical element is free of defects and from the optical source to a destination that is different than the optical detector when the optical element includes at least one defect, wherein the optical waveguide is integrated in the optical element surrounded by a medium that has a first index of refraction and wherein the optical waveguide has a second index of refraction that is different than the first index of refraction, or wherein the optical waveguide is separate from and attached to the optical element and includes at least one of an optical fiber, a translucid cylinder, or a plate.

According to one aspect, the optical beam path optically interacts with the optical beam transforming surface.

According to one aspect, the optical waveguide is attached to the optical element and comprises an entrance facet for receiving the second optical beam that is positioned opposite the optical source, and an exit facet for transmitting the second optical beam that is positioned opposite the optical detector, wherein at least one of the entrance or exit facets is mechanically free from the optical source or the optical detector, respectively.

According to one aspect, the at least one defect in the optical element causes the at least one of the entrance or exit facets to move away from the optical source or the optical detector, respectively.

According to one aspect, the optical waveguide is inside the optical element.

According to one aspect, the optical element is made from a first material and the optical waveguide is made from a second material that is the same as the first material.

According to one aspect, the optical element is made from a first material and the optical waveguide is made from a second material that is different than the first material.

According to one aspect, the first material has a first index of refraction and the second material has a second index of refraction that is greater than the first index of refraction.

According to one aspect, the optical beam transforming surface includes a first transforming surface that transforms the first optical beam to provide an intermediate transformed first optical beam, and a second transforming surface that transforms the intermediate transformed first optical beam to provide the transformed first optical beam.

According to one aspect, the optical waveguide is arranged between the first transforming surface and the second transforming surface.

According to one aspect, the first and second optical beam transforming surfaces provide at least one light transforming function.

According to one aspect, the optical source forms the second optical beam as a non-collimated beam.

According to one aspect, the optical source forms the second optical beam as a collimated beam.

Furthermore, as defined in claim 14, a method for detecting defects in an optical element using the apparatus described above includes using the optical source to generate the second optical beam, using the optical waveguide to transmit the second optical beam via the optical beam path, the method comprising the steps of determining whether the optical detector receives the second optical beam via the optical beam path, and in response to determining that the optical detector fails to receive the second optical beam, switching off the first optical beam.

According to claim 15 an aircraft includes the apparatus for detecting defects in an optical element as described above.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative aircraft with a defect detecting apparatus in accordance with some embodiments,
- Figure 2 is a diagram of an illustrative optical element with a defect detecting apparatus that uses waveguiding in accordance with some embodiments,
- Figure 3 is a diagram of an illustrative optical element with a defect detecting apparatus that uses a non-collimated beam in accordance with some embodiments,
- Figure 4 is a diagram of an illustrative optical element with a defect detecting apparatus that uses a separate plate as an optical waveguide in accordance with some embodiments,
- Figure 5 is a diagram of an illustrative optical element with a defect detecting apparatus that uses a separate optical fiber as an optical waveguide in accordance with some embodiments,
- Figure 6 is a diagram of an illustrative cross section of an optical element with a defect detecting apparatus that has an optical waveguide arranged between two transforming surfaces in accordance with some embodiments, and
- Figure 7 is a diagram of a flowchart showing illustrative operations for detecting defects in an optical element in accordance with some embodiments.

Exemplary embodiments may be included in any devices or vehicles with an optical element that includes an optical beam transforming surface and transforms an optical beam to provide a transformed optical beam, if desired. Examples for devices may include laser cutting or welding machines, laser scanners and printers, optical distance measurement instruments, optical storage media, optical recognition devices, etc. Examples for vehicles may include airplanes, quadcopters, helicopters, drones, cars, buses, trucks, ships, etc.

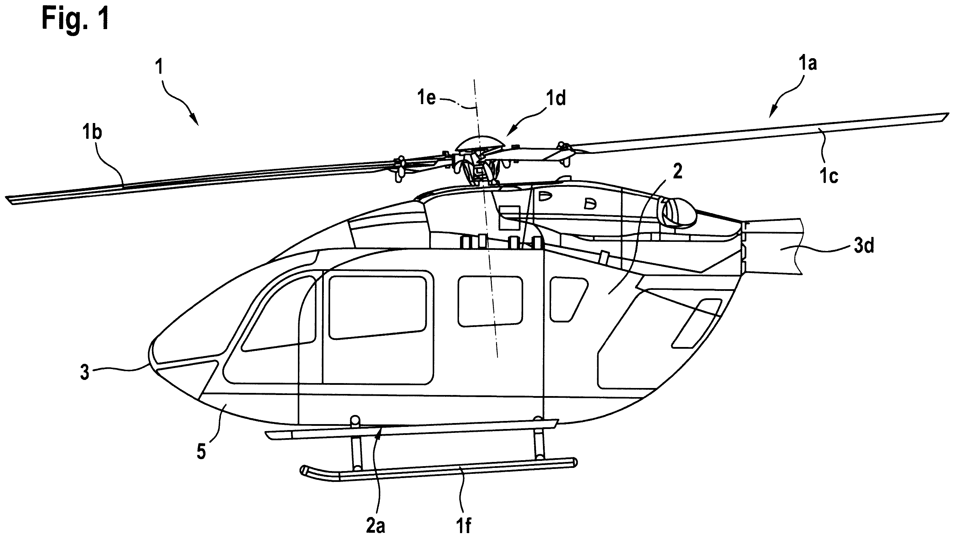

Figure 1 shows an example of a vehicle. As shown in Figure 1, the vehicle may be an aircraft 1. The aircraft may be an airplane, a drone, or a rotorcraft. The aircraft 1 is exemplarily illustrated as a helicopter. Thus, for purposes of simplicity and clarity, aircraft 1 is hereinafter referred to as the "helicopter" 1.

Helicopter 1 is exemplarily embodied with fuselage 2 and at least one multi-blade main rotor 1a for providing lift and forward or backward thrust during operation.

At least one multi-blade main rotor 1a illustratively comprises a plurality of rotor blades 1b, 1c. Rotor blades 1b, 1c are mounted at an associated rotor head 1d to a rotor shaft, which rotates in operation of helicopter 1 around associated rotor axis 1e.

Fuselage 2 comprises fuselage underside 2a that is illustratively connected to landing gear 1f. Landing gear 1f is exemplarily embodied as a skid-type landing gear.

Fuselage 2 may define nose region 3 that is arranged in front of fuselage 2. Fuselage 2 may include an optical element with defect detecting apparatus 5, which is illustratively arranged between fuselage underside 2a and nose region 3 of fuselage 2. Fuselage 2 also defines tail boom 3d, which is cut away and not shown in greater detail, for simplicity and clarity of the drawings.

Optical element with defect detecting apparatus 5 may be arranged anywhere inside or outside of helicopter 1 in such a way that the optical element projects a light beam into a public space. As an example, in a High Intensity Search Light (HISL) of helicopter 1, a high-power laser beam may be combined with a zoom lens optical system to provide for an adaptive light beam diameter. As another example, a high-power laser beam may be combined with a diffractive optical element to project a ground pattern for situational awareness. As yet another example, a high-power laser beam may be combined with a digital mirror device (DMD) to project dynamic patterns.

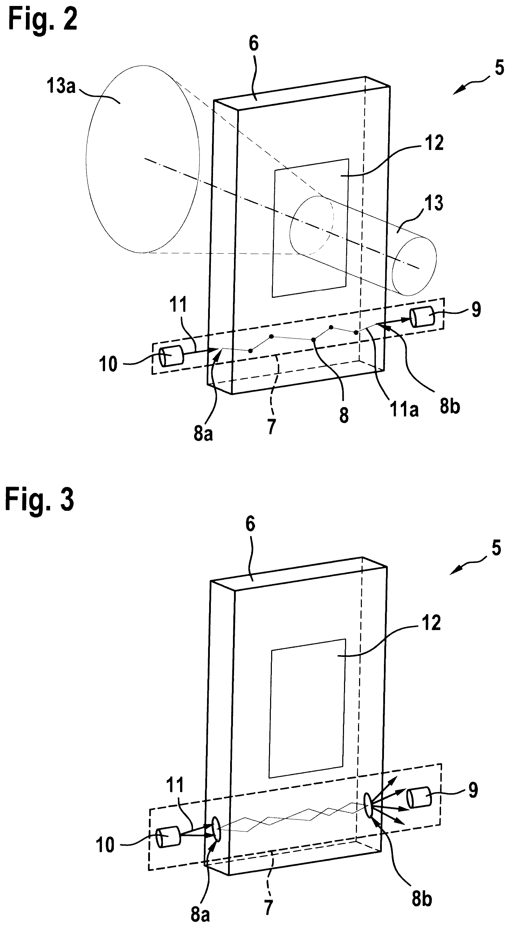

Figure 2 shows illustrative apparatus 5 for detecting defects in optical element 6 that includes optical beam transforming surface 12 and optical gate 7. Optical beam transforming surface 12 is located on optical element 6 and transforms optical beam 13 to provide transformed optical beam 13a.

Optical beam 13 may be any optical beam with a given intensity. In some embodiments, optical beam 13 may present a safety hazard such as a hazard for a living being (e.g., an ocular hazard) or a fire hazard to objects. For example, optical beam 13 may be a high-power laser beam that may cause burns to the skin or permanent damage to the eye of a living being. Optical beam transforming surface 12 may perform any transformation of incoming optical beam 13 to provide outgoing transformed optical beam 13a. For example, optical beam transforming surface 12 may perform upon optical beam 13 transformations such as refraction, diffraction, reflection, dispersion, scattering, polarization, distortion, conversion, diversion, or any combination thereof. As a result, transformed optical beam 13a may be inherently safe or may be safe outside the specified NOHD. In other words, transformed optical beam 13a may present no safety hazard or may pose a safety hazard only within the specified NOHD.

For example, as shown in Figure 2, optical beam transforming surface 12 may transform optical beam 13 into transformed optical beam 13a such that transformed optical power is spread in a larger beam cone with potential lower peak intensity.

Optical gate 7 includes optical detector 9, optical source 10 and optical waveguide 8. Optical source 10 may generate any form of electromagnetic wave that lies inside or outside the spectrum of visible light and provides optical beam 11 which optical detector 9 can detect. For example, optical source 10 may include a lamp, a light-emitting diode (LED), a low-power laser diode, etc. In some embodiments, optical source 10 may be a passive optical source that uses an existing electromagnetic wave to provide optical beam 11. For example, optical source 10 may provide a portion of optical beam 13 (e.g., using optical fiber) as optical beam 11. As another example, optical source 10 may use ambient light as optical beam 11.

In some embodiments, optical detector 9 may receive optical beam 11 from optical source 10 through optical waveguide 8. Optical detector 9 may be any device that converts optical beam 11 and/or information provided with optical beam 11 directly or indirectly into an electrical signal, if desired. For example, optical detector 9 may include one or more of a photoresistor, a photocell, a photodiode, a phototransistor, a photomultiplier tube, a photovoltaic cell, etc.

Optical waveguide 8 provides optical beam path 11a for optical beam 11 from optical source 10 to optical detector 9 when optical element 6 is free of defects and from optical source 10 to a destination that is different than optical detector 9 when optical element 6 includes a defect. In other words, scenarios in which optical beam 11 fails to reach optical detector 9 may be indicative of a defect in optical element 6.

As shown in Figure 2, optical waveguide 8 may be integrated in optical element 6. If desired, optical waveguide 8 may form optical beam path 11a in a portion of optical element 6 that is separate from optical beam transforming surface 12. Optical waveguide 8 within optical element 6 has a different index of refraction than the index of refraction of the medium that surrounds optical element 6 such that optical beam 11 remains inside optical waveguide 8.

Optical waveguide 8 includes entrance facet 8a for receiving optical beam 11 that is positioned opposite optical source 10 and exit facet 8b for transmitting optical beam 11 that is positioned opposite optical detector 9.

In some embodiments, at least one of entrance 8a or exit facets 8b may be mechanically free from optical source 10 or optical detector 9, respectively. In other words, one or both of optical source 10 and/or optical detector 9 may not be in contact with optical element 6. If desired, both entrance 8a and exit 8b facets may be mechanically free from optical source 10 and optical detector 9.

In some embodiments, both optical source 10 and optical detector 9 may be mechanically attached to optical waveguide 8, and a defect in optical element 6 may cause a detectable change of optical beam throughput in optical beam path 11a from optical source 10 to optical detector 9. Optical detector may detect the change of optical beam throughput. For example, a defect in an optical fiber may transmit most of the optical power of the optical beam from optical source 10 to optical detector 9. However, the defect may reflect or scatter a portion of the optical beam out of waveguide 8. The change in optical power may be detected by optical detector 9.

Consider the scenario in which a defect in optical waveguide 8 may be indicative of a defect in optical element 6. Consider further that a defect in optical element 6 represents an ocular hazard outside the NOHD and that the defect in optical waveguide 8 prevents optical beam 11 from reaching optical detector 9. In this scenario, optical detector 9 may generate an electrical signal that triggers a shutdown of optical beam 13 in response to not detecting optical beam 11 to prevent harm to anybody and anything outside the NOHD.

In some embodiments, optical source 10 may provide optical beam 11 as a collimated beam. For example, optical beam 11 of Figure 2 is shown as a collimated beam. In this example, optical beam 11 may have at least one surface interaction with optical waveguide 8 (e.g., to prevent optical beam 11 from reaching optical detector 9 in case of a defect in optical waveguide 8 caused by a defect in optical element 6). If desired, optical source 10 may provide optical beam 11 as a non-collimated beam.

Figure 3 illustrates optical element 6 with defect detecting apparatus 5 according to some embodiments in which optical waveguide 8 of optical gate 7 and optical beam transforming surface 12 are integrated into optical element 6.

Optical beam transforming surface 12 may perform any transformation of incoming optical beam to provide outgoing transformed optical beam. For example, the incoming optical beam may present a safety hazard such as a hazard for a living being (e.g., an ocular hazard) or a hazard for an object. For example, the incoming optical beam may be a high-power laser beam that may cause burns to the skin or permanent damage to the eye of a living being. Optical beam transforming surface 12 may perform upon the incoming optical beam transformations such as refraction, diffraction, reflection, dispersion, scattering, polarization, distortion, conversion, diversion, or any combination thereof. As a result, the outgoing transformed optical beam may be safe. In other words, transformed optical beam may present no safety hazard.

Optical waveguide 8 provides an optical beam path for optical beam 11 from optical source 10 to optical detector 9 when optical element 6 is free of defects and from optical source 10 to a destination that is different than optical detector 9 when optical element 6 includes a defect. In other words, scenarios in which optical beam 11 fails to reach optical detector 9 may be indicative of a defect in optical element 6.

As shown in Figure 3, optical waveguide 8 may be integrated in optical element 6. If desired, optical waveguide 8 may form optical beam path in a portion of optical element 6 that is separate from optical beam transforming surface 12. Optical waveguide 8 within optical element 6 has a different index of refraction than the index of refraction of the medium that surrounds optical element 6 such that optical beam 11 remains inside optical waveguide 8.

As shown in Figure 3, optical source 10 may provide optical beam 11 as a non-collimated beam. Optical beam 11 may enter optical waveguide 8 at entrance facet 8a. Optical beam 11 may be reflected on the surface of optical waveguide 8 and exit optical waveguide 8 at exit facet 8b. Thus, optical detector 9 may detect at least a portion of optical beam 11 when optical element is free of defects.

As an example, consider the scenario in which a defect in optical waveguide 8 may be indicative of a defect in optical element 6. Consider further that a defect in optical element 6 causes a defect in optical waveguide 8 that prevents optical beam 11 from reaching optical detector 9. In this scenario, optical detector 9 may generate an electrical signal that is indicative of the defect in optical element 6.

As shown in Figures 2 and 3, optical waveguide 8 is integrated in optical element 6. In some embodiments, the optical waveguide may be located outside optical element 6. For example, the optical waveguide is attached to the optical element.

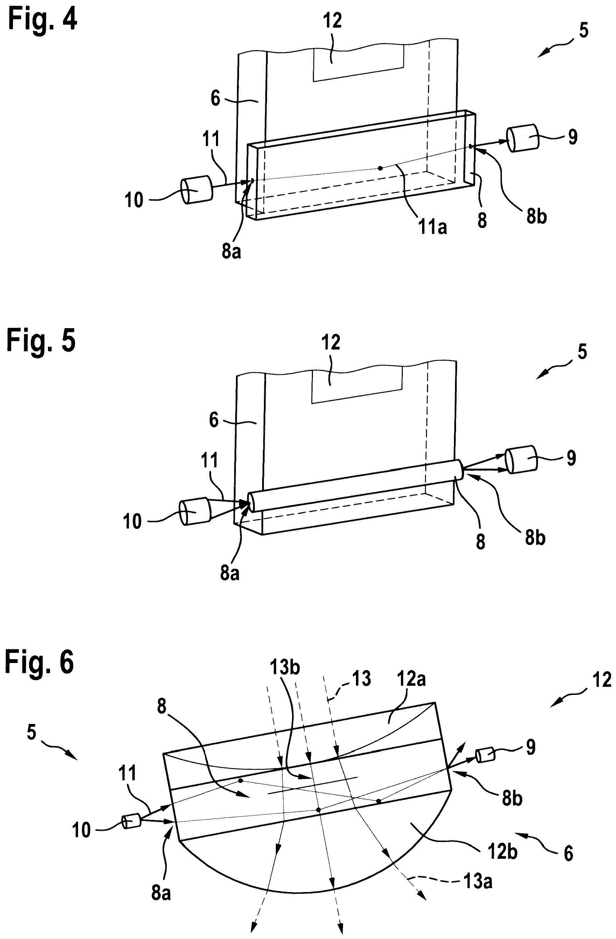

Figures 4 and 5 show illustrative partial views of optical element 6 with defect detecting apparatus 5 that includes optical waveguide 8 as a component that is separate from and attached to optical element 6.

If desired, optical waveguide 8 of Figures 4 and 5 may include a material that has at least equal failure sensitivity as the material of optical element 6. In other words, a defect in optical waveguide 8 that prevents optical beam 11 from reaching optical detector 9 may precede a defect in optical element 6. As a result, optical detector 9 may generate an electrical signal that is indicative of the defect in optical element 6.

Optical waveguide 8 may be made from any material and have any shape suitable to provide an optical beam path for optical beam 11 from optical source 10 to optical detector 9. For example, optical waveguide 8 may include an optical fiber, a translucid cylinder, or a plate, just to name a few.

Figure 4 shows optical waveguide 8 as a translucid plate. The index of refraction of optical waveguide 8 may be higher than both the index of refraction of optical element 6 and the index of refraction of the surrounding medium of optical waveguide 8. Thus, optical waveguide 8 may receive optical beam 11 from optical source 10 at entrance facet 8a and guide optical beam 11 along optical beam path 11a through optical waveguide 8 to exit facet 8b. Optical source 10 may provide a collimated and/or a non-collimated optical beam 11, if desired.

Figure 5 shows optical waveguide 8 as an optical fiber that receives optical beam 11 from optical source 10 at entrance facet 8a and provides optical beam 11 at exit facet 8b. Optical source 10 may provide a collimated and/or a non-collimated optical beam 11. If desired, optical source 10 may be a passive light device that splits off a portion of the optical beam that enters optical beam transforming surface 12.

In some embodiments, optical beam path 11a may be located inside optical element 6 and pass through optical beam transforming surface 12.

Figure 6 shows a schematic partial cut plan view of an illustrative optical element with defect detecting apparatus 5 in which the optical beam interacts with the optical beam transforming surface in accordance with some embodiments.

According to one aspect, optical beam transforming surface 12 may ensure that optical beam 13 is either defocused or split off in one or more optical beams of less power.

As shown in Figure 6, optical beam transforming surface 12 may include transforming surface 12a that transforms optical beam 13 to provide intermediate optical beam 13b and transforming surface 12b that transforms intermediate optical beam 13b to provide transformed optical beam 13a. Transforming surfaces 12a and/or 12b may include at least one light transforming function such as refraction, diffraction, reflection, dispersion, scattering, polarization, distortion, conversion, diversion, or any combination thereof.

According to Figure 6, optical waveguide 8 may be arranged between transforming surfaces 12a and 12b in optical element 6. The index of refraction of optical waveguide 8 may be higher than the index of refraction of transforming surfaces 12a and 12b. Thus, optical waveguide 8 may receive optical beam 11 from optical source 10 at entrance facet 8a and guide optical beam 11 along optical beam path 11a through optical waveguide 8 to exit facet 8b. Optical source 10 may provide a collimated and/or a non-collimated optical beam 11, if desired.

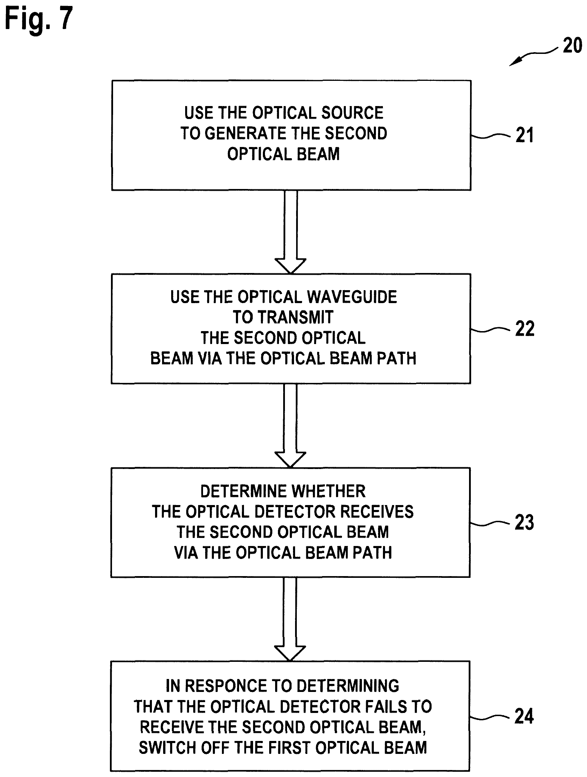

Figure 7 is a flowchart 20 showing illustrative operations for detecting defects in an optical element with a defect detecting apparatus such as detecting defects in optical element 6 with defect detecting apparatus 5 of Figures 2 to 6 in accordance with some embodiments.

During operation 21, the defect detecting apparatus uses an optical source to generate an optical beam. For example, optical source 10 of optical element 6 with defect detecting apparatus 5 of Figures 2 to 6 may generate optical beam 11.

During operation 22, the defect detecting apparatus uses an optical waveguide to transmit the optical beam via an optical beam path. For example, optical waveguide 8 of optical element 6 with defect detecting apparatus 5 of Figures 2 to 6 may transmit optical beam 11 via optical beam path 11a.

During operation 23, the defect detecting apparatus determines whether an optical detector receives the optical beam via the optical beam path. For example, optical element 6 with defect detecting apparatus 5 of Figures 2 to 6 may determine whether optical detector 9 receives optical beam 11 via optical beam path 11a.

In response to determining that the optical detector fails to receive at least a portion of the optical beam, the defect detecting apparatus may switch off another optical beam during operation 22. For example, in response to determining that optical detector 9 fails to receive at least a portion of optical beam 11 (e.g., optical beam 11 may be partially or totally reflected or scattered such that optical detector 9 receives a lower optical power compared to the optical power received when defect detecting apparatus 5 is in a defect free state), optical element 6 with defect detecting apparatus 5 of Figures 2 to 6 switches off optical beam 13.

It should be noted that the above-described embodiments are merely described for illustration purposes, but not in order to restrict the present invention thereto. Instead, multiple modifications and variations of the presented embodiments are within the scope of the appended claims and should, therefore, also be considered as being part of the invention. For example, transforming surface 12b of Figure 6 is shown as a plano-convex lens. If desired, transforming surface 12b may be flat on all sides and have a coating such as a nano-particle coating. As another example, transforming surface 12b of Figure 6 may be a gradientindex lens.

### Reference List

- 1: aircraft
- 1a: multi-blade main rotor
- 1b, 1c: rotor blades
- 1d: rotor head
- 1e: main rotor axis
- 1f: landing gear
- 2: fuselage
- 2a: fuselage underside
- 3: nose region
- 3d: tail boom
- 5: optical element with defect detecting apparatus
- 6: optical element
- 7: optical gate
- 8: optical waveguide
- 8a: entrance facet
- 8b: exit facet
- 9: optical detector
- 10: optical source
- 11: optical beam

- 11a: optical beam path
- 12: optical beam transforming surface
- 12a: transforming surface
- 12b: transforming surface
- 13: optical beam
- 13a: transformed optical beam
- 13b: intermediate optical beam
- 20: flowchart
- 21, 22, 23, 24: operations.

## Claims

1. An apparatus (5) for detecting defects in an optical element (6), wherein the optical element comprises an optical beam transforming surface (12) that transforms a first optical beam (13) to provide a transformed first optical beam (13a), the apparatus comprising:
an optical detector (9);
an optical source (10) that provides a second optical beam (11); and
an optical waveguide (8) that is coupled to the optical element (6) and provides an optical beam path (11a) for the second optical beam (11) from the optical source (10) to the optical detector (9) when the optical element (6) is free of defects and from the optical source (10) to a destination that is different than the optical detector (9) when the optical element (6) includes at least one defect, **characterized in that** the optical waveguide (8) is integrated in the optical element (6) surrounded by a medium that has a first index of refraction and wherein the optical waveguide (8) has a second index of refraction that is different than the first index of refraction, or **in that** the optical waveguide (8) is separate from and attached to the optical element (6) and includes at least one of an optical fiber, a translucid cylinder, or a plate.

2. The apparatus (5) of claim 1,
wherein the optical beam path (11a) optically interacts with the optical beam transforming surface (12).

3. The apparatus (5) of claim 1,
wherein the optical waveguide (8) is attached to the optical element (6) and further comprises:
an entrance facet (8a) for receiving the second optical beam (11) that is positioned opposite the optical source (10); and
an exit facet (8b) for transmitting the second optical beam (11) that is positioned opposite the optical detector (9), and wherein at least one of the entrance (8a) or exit facets (8b) is mechanically free from the optical source (10) or the optical detector (9), respectively.

4. The apparatus (5) of claim 3,
wherein the at least one defect in the optical element (6) causes the at least one of the entrance (8a) or exit facets (8b) to move away from the optical source (10) or the optical detector (9), respectively.

5. The apparatus (5) of claim 1,
wherein the optical waveguide (8) is inside the optical element (6).

6. The apparatus (5) of claim 5,
wherein the optical element (6) is made from a first material and the optical waveguide (8) is made from a second material that is the same as the first material.

7. The apparatus (5) of claim 5,
wherein the optical element (6) is made from a first material and the optical waveguide (8) is made from a second material that is different than the first material.

8. The apparatus (5) of claim 7,
wherein the first material has a first index of refraction and the second material has a second index of refraction that is greater than the first index of refraction.

9. The apparatus (5) of claim 1, the optical beam transforming surface (12) further comprises:
a first transforming surface (12a) that transforms the first optical beam (13) to provide an intermediate transformed first optical beam (13b); and
a second transforming surface (12b) that transforms the intermediate transformed first optical beam (13b) to provide the transformed first optical beam (13a).

10. The apparatus (5) of claim 9,
wherein the optical waveguide (8) is arranged between the first transforming surface (12a) and the second transforming surface (12b).

11. The apparatus (5) of claim 10,
wherein the first and second optical beam transforming surfaces (12a, 12b) provide at least one light transforming function.

12. The apparatus (5) of claim 1,
wherein the optical source (10) forms the second optical beam (11) as a non-collimated beam.

13. The apparatus (5) of claim 1,
wherein the optical source (10) forms the second optical beam (11) as a collimated beam.

14. A method (20) for detecting defects in an optical element (6) using the apparatus (5) of any of the preceding claims, comprising:
using (21) the optical source (10) to generate the second optical beam (11);
using (22) the optical waveguide (8) to transmit the second optical beam (11) via the optical beam path (11a);
determining (23) whether the optical detector (9) receives the second optical beam (11) via the optical beam path (11a); and
in response to determining that the optical detector (9) fails to receive at least a portion of the second optical beam (11), switching off (24) the first optical beam (13).

15. An aircraft (1) with the apparatus (5) for detecting defects in an optical element (6) of any of claims 1 to 13.

## Patentansprüche

1. Vorrichtung (5) zum Erfassen von Defekten in einem optischen Element (6), wobei das optische Element eine optische Strahltransformationsfläche (12) umfasst, die einen ersten optischen Strahl (13) transformiert, um einen transformierten ersten optischen Strahl (13a) zu erzeugen, wobei die Vorrichtung umfasst:
einen optischen Detektor (9);
eine optische Quelle (10), die einen zweiten optischen Strahl (11) liefert; und
einen optischen Wellenleiter (8), der mit dem optischen Element (6) gekoppelt ist und einen optischen Strahlengang (11a) für den zweiten optischen Strahl (11) bereitstellt von der optischen Quelle (10) zu dem optischen Detektor (9), wenn das optische Element (6) frei von Defekten ist, und von der optischen Quelle (10) zu einem Ziel, das von dem optischen Detektor (9) verschieden ist, wenn das optische Element (6) mindestens einen Defekt aufweist, **dadurch gekennzeichnet, dass** der optische Wellenleiter (8) in das optische Element (6) integriert ist, das von einem Medium umgeben ist, das einen ersten Brechungsindex aufweist, und wobei der optische Wellenleiter (8) einen zweiten Brechungsindex aufweist, der sich von dem ersten Brechungsindex unterscheidet, oder dass der optische Wellenleiter (8) von dem optischen Element (6) getrennt und an diesem befestigt ist und mindestens eine optische Faser, einen durchsichtigen Zylinder oder eine Platte umfasst.

2. Vorrichtung (5) nach Anspruch 1,
bei der der optische Strahlengang (11a) mit der den optischen Strahl transformierenden Oberfläche (12) optisch wechselwirkt.

3. Vorrichtung (5) nach Anspruch 1,
bei der der Lichtwellenleiter (8) an dem optischen Element (6) angebracht ist und ferner umfasst:
eine Eintrittsfacette (8a) zum Empfang des zweiten optischen Strahls (11), die gegenüber der optischen Quelle (10) angeordnet ist; und
eine Austrittsfacette (8b) zum Aussenden des zweiten optischen Strahls (11), die gegenüber dem optischen Detektor (9) angeordnet ist, und wobei mindestens eine der Eintritts- (8a) oder Austrittsfacetten (8b) mechanisch frei von der optischen Quelle (10) bzw. dem optischen Detektor (9) ist.

4. Vorrichtung (5) nach Anspruch 3,
bei der der mindestens eine Defekt in dem optischen Element (6) bewirkt, dass sich die mindestens eine der Eintritts-(8a) oder Austrittsfacetten (8b) von der optischen Quelle (10) bzw. dem optischen Detektor (9) wegbewegt.

5. Vorrichtung (5) nach Anspruch 1,
bei der sich der optische Wellenleiter (8) innerhalb des optischen Elements (6) befindet.

6. Vorrichtung (5) nach Anspruch 5,
bei der das optische Element (6) aus einem ersten Material und der optische Wellenleiter (8) aus einem zweiten Material hergestellt ist, das das gleiche wie das erste Material ist.

7. Vorrichtung (5) nach Anspruch 5,
bei der das optische Element (6) aus einem ersten Material und der optische Wellenleiter (8) aus einem zweiten Material hergestellt ist, das sich von dem ersten Material unterscheidet.

8. Vorrichtung (5) nach Anspruch 7,
bei der das erste Material einen ersten Brechungsindex hat und das zweite Material einen zweiten Brechungsindex hat, der größer ist als der erste Brechungsindex.

9. Vorrichtung (5) nach Anspruch 1, bei der die optische Strahltransformationsfläche (12) ferner umfasst:
eine erste Transformationsfläche (12a), die den ersten optischen Strahl (13) transformiert, um einen intermediären transformierten ersten optischen Strahl (13b) zu erzeugen; und
eine zweite Transformationsfläche (12b), die den intermediären transformierten ersten optischen Strahl (13b) transformiert, um den transformierten ersten optischen Strahl (13a) zu erzeugen.

10. Vorrichtung (5) nach Anspruch 9,
bei der der optische Wellenleiter (8) zwischen der ersten Transformationsfläche (12a) und der zweiten Transformationsfläche (12b) angeordnet ist.

11. Vorrichtung (5) nach Anspruch 10,
bei der die erste und die zweite optische Strahltransformationsfläche (12a, 12b) mindestens eine Lichttransformationsfunktion bereitstellen.

12. Vorrichtung (5) nach Anspruch 1,
bei der die optische Quelle (10) den zweiten optischen Strahl (11) als nicht kollimierten Strahl bildet.

13. Vorrichtung (5) nach Anspruch 1,
bei der die optische Quelle (10) den zweiten optischen Strahl (11) als kollimierten Strahl bildet.

14. Verfahren (20) zum Erfassen von Defekten in einem optischen Element (6) unter Verwendung der Vorrichtung (5) nach einem der vorhergehenden Ansprüche, umfassend:
Verwenden (21) der optischen Quelle (10) zum Erzeugen des zweiten optischen Strahls (11);
Verwenden (22) des optischen Wellenleiters (8), um den zweiten optischen Strahl (11) über den optischen Strahlengang (11a) zu übertragen;
Bestimmen (23), ob der optische Detektor (9) den zweiten optischen Strahl (11) über den optischen Strahlengang (11a) empfängt; und
in Reaktion auf die Feststellung, dass der optische Detektor (9) zumindest einen Teil des zweiten optischen Strahls (11) nicht empfängt, Abschalten (24) des ersten optischen Strahls (13).

15. Luftfahrzeug (1) mit der Vorrichtung (5) zum Erfassen von Fehlern in einem optischen Element (6) nach einem der Ansprüche 1 bis 13.

## Revendications

1. Dispositif (5) pour la détection de défauts dans un composant optique (6), dans lequel le composant optique comprend une surface (12) de transformation de faisceau optique qui transforme un premier faisceau optique (13) afin de produire un premier faisceau optique transformé (13a), le dispositif comprenant:
un détecteur optique (9) ;
une source optique (10) qui produit un second faisceau optique (11) ; et
un guide d'ondes optique (8) qui est couplé au composant optique (6) et qui définit un trajet (11a) de faisceau optique pour le second faisceau optique (11) depuis la source optique (10) jusqu'au détecteur optique (9) lorsque le composant optique (6) est exempt de défauts et depuis la source optique (10) jusqu'à une destination qui est différente du détecteur optique (9) lorsque le composant optique (6) inclut au moins un défaut, **caractérisé en ce que** le guide d'ondes optique (8) est intégré dans le composant optique (6), entouré d'un environnement qui présente un premier indice de réfraction et tel que le guide d'ondes optique (8) présente un second indice de réfraction qui est différent du premier indice de réfraction, ou **en ce que** le guide d'ondes optique (8) est distinct du composant optique (6) et est fixé au composant optique (6) et inclut au moins l'un parmi une fibre optique, un cylindre translucide ou une plaque translucide.

2. Dispositif (5) selon la revendication 1,
dans lequel le trajet (11a) de faisceau optique interagit optiquement avec la surface (12) de transformation de faisceau optique.

3. Dispositif (5) selon la revendication 1,
dans lequel le guide d'ondes optique (8) est fixé à le composant optique (6) et comprend en outre :
une facette d'entrée (8a) pour recevoir le second faisceau optique (11) qui est positionnée en face de la source optique (10) ; et
une facette de sortie (8b) pour transmettre le second faisceau optique (11) qui est positionnée en face du détecteur optique (9), et dans lequel au moins l'une parmi les facettes d'entrée (8a) ou de sortie (8b) est sans lien mécanique avec la source optique (10) ou le détecteur optique (9), respectivement.

4. Dispositif (5) selon la revendication 3,
dans lequel ledit au moins un défaut dans le composant optique (6) provoque un déplacement qui écarte ladite au moins une parmi les facettes d'entrée (8a) ou de sortie (8b) de la source optique (10) ou du détecteur optique (9), respectivement.

5. Dispositif (5) selon la revendication 1,
dans lequel le guide d'ondes optique (8) est à l'intérieur de le composant optique (6).

6. Dispositif (5) selon la revendication 5,
dans lequel le composant optique (6) est formé d'un premier matériau et le guide d'ondes optique (8) est formé d'un second matériau qui est le même que le premier matériau.

7. Dispositif (5) selon la revendication 5,
dans lequel le composant optique (6) est formé d'un premier matériau et le guide d'ondes optique (8) est formé d'un second matériau qui est différent du premier matériau.

8. Dispositif (5) selon la revendication 7,
dans lequel le premier matériau présente un premier indice de réfraction et le second matériau présente un second indice de réfraction qui est plus grand que le premier indice de réfraction.

9. Dispositif (5) selon la revendication 1, dans lequel la surface (12) de transformation de faisceau optique comprend en outre :
une première surface (12a) de transformation qui transforme le premier faisceau optique (13) pour produire un premier faisceau optique transformé intermédiaire (13b) ; et
une seconde surface (12b) de transformation qui transforme le premier faisceau optique transformé intermédiaire (13b) pour produire le premier faisceau optique transformé (13a).

10. Dispositif (5) selon la revendication 9,
dans lequel le guide d'ondes optique (8) est aménagé entre la première surface (12a) de transformation et la seconde surface (12b) de transformation.

11. Dispositif (5) selon la revendication 10,
dans lequel les première et seconde surfaces (12a, 12b) de transformation de faisceau optique assurent au moins une fonction de transformation de la lumière.

12. Dispositif (5) selon la revendication 1,
dans lequel la source optique (10) produit le second faisceau optique (11) sous la forme d'un faisceau non collimaté.

13. Dispositif (5) selon la revendication 1,
dans lequel la source optique (10) produit le second faisceau optique (11) sous la forme d'un faisceau collimaté.

14. Procédé (20) pour la détection de défauts dans un composant optique (6) utilisant le dispositif (5) selon l'une quelconque des revendications précédentes et prévoyant :
l'utilisation (21) de la source optique (10) pour générer le second faisceau optique (11) ;
l'utilisation (22) du guide d'ondes optique (8) pour transmettre le second faisceau optique (11) via le trajet (11a) de faisceau optique ;
la détermination (23) de ce que le détecteur optique (9) reçoit le second faisceau optique (11) via le trajet (11a) de faisceau optique ; et
l'interruption (24) du premier faisceau optique (13) en réponse à la détermination de ce que le détecteur optique (9) ne parvient pas à recevoir au moins une partie du second faisceau optique (11).

15. Aéronef (1) avec le dispositif (5) pour la détection de défauts dans un composant optique (6) selon l'une quelconque des revendications 1 à 13.
